# EUROPÄISCHE PATENTSCHRIFT

(11) **EP 3 667 107 B1**
(45) Veröffentlichungstag und Bekanntmachung des Hinweises auf die Patenterteilung: **07.06.2023**
(21) Anmeldenummer: 19212885.8
(22) Anmeldetag: 02.12.2019
(51) Int. Cl.: F16B 25/00, F16B 25/10, F16B 23/00, F16B 5/02, B25B 15/00, B25B 23/00, F16B 35/06, E04F 13/08

(54) **HÜLSE ZUR WEITERBILDUNG EINER SCHRAUBE IN EINE DISTANZSCHRAUBE, SCHRAUBE MIT EINER SOLCHEN HÜLSE UND DREHWERKZEUG ZUM EINSCHRAUBEN DER SCHRAUBE**
SLEEVE FOR FORMING A SCREW IN A SPACING SCREW, SCREW PROVIDED WITH SUCH A SLEEVE, AND ROTARY TOOL FOR SCREWING IN THE SCREW
MANCHON DE TRANSFORMATION D'UNE VIS EN UNE VIS D'ÉCARTEMENT, VIS DOTÉE D'UN TEL MANCHON ET OUTIL ROTATIF PERMETTANT DE VISSER LA VIS

(30) Priorität: 11.12.2018 DE 102018131665
(43) Veröffentlichungstag der Anmeldung: 17.06.2020
(73) Patentinhaber: fischerwerke GmbH & Co. KG, 72178 Waldachtal (DE)
(72) Erfinder: Pfau, Patrick, 72275 Alpirsbach (DE); Krumbeck, Markus, 71159 Mötzingen (DE)
(74) Vertreter: Suchy, Ulrich Johannes

(56) Entgegenhaltungen:
- EP-A1- 1 184 577
- EP-A1- 1 475 504
- EP-A1- 1 972 799
- DE-A1- 4 345 193
- DE-U1- 8 126 176
- DE-U1- 29 603 457

## Beschreibung

Die Erfindung betrifft eine Hülse zur Weiterbildung einer einen Schraubenkopf aufweisenden Schraube in eine Distanzschraube, eine Schraube mit einer solchen Hülse mit den Merkmalen des Oberbegriffs des Anspruchs 4 und ein Drehwerkzeug zum Einschrauben der Schraube in einen Ankergrund und zu einer Abstandseinstellung mit den Merkmalen des Oberbegriffs des Anspruchs 6.

Distanzschrauben sind bekannt. Sie werden durch ein Bauteil wie beispielsweise eine Wand- oder Deckenverkleidung in einen Ankergrund wie beispielsweise eine Wand oder eine Decke geschraubt und weisen in einem Bereich, der sich am Ende des Einschraubens in dem Bauteil befindet, umlaufende Rippen auf, die dem Bauteil einen axialen Halt auf der Distanzschraube geben. Im Ankergrund wird die Distanzschraube beispielsweise in einen Spreizdübel in einem Bohrloch in dem Ankergrund geschraubt. Durch Rückdrehen der Distanzschraube wird ein gewünschter Abstand zwischen dem Bauteil und dem Ankergrund hergestellt.

Die europäische Patentanmeldung EP 0 267 161 A2 offenbart eine zweigeteilte Hülse, die im Bereich eines Schraubenkopfs auf eine Zylinderkopfschraube aufsetzbar ist. Die Hülse weist ein Außengewinde auf und ist in einer Axialebene in zwei halbzylinderschalenförmige Hülsen geteilt, die mit druckknopfartigen Zapfen verbindbar sind. Innen weisen die beiden halbzylinderförmigen Hülsen Aussparungen für eine Aufnahme des Schraubenkopfs der Zylinderkopfschraube auf, die die Hülse axial am Schraubenkopf festlegen, wobei die Hülse auf der Zylinderkopfschraube drehbar ist. An einem Ende weisen die beiden halbzylinderschalenförmigen Hülsen Ringe auf, die koaxial und deckungsgleich übereinander auf einer Oberseite des Schraubenkopfs aufliegen, wenn die beiden halbzylinderschalenförmigen Hülsen den Schraubenkopf umschließend zusammengesetzt sind. Durch die Ringe der halbzylinderschalenförmigen Hülsen ist ein Innensechskant im Schraubenkopf der Zylinderkopfschraube zugänglich und die Ringe weisen Innensechskante mit der gleichen Größe wie der Innensechskant im Schraubenkopf auf, so dass die Zylinderkopfschraube und die Hülse mit einem Inbusschlüssel drehend antreibbar sind. Zu einer Abstandsmontage wird die Zylinderkopfschraube mit aufgesetzter Hülse durch ein Bauteil in einen Ankergrund geschraubt, wobei die Hülse in das Bauteil geschraubt wird. Anschließend wird die Zylinderkopfschraube wieder ein Stück weit aus dem Ankergrund herausgedreht, wobei nur noch die Zylinderkopfschraube gedreht wird, so dass die Hülse das Bauteil axialfest auf der Zylinderkopfschraube hält. Dadurch ist eine Abstandseinstellung des Bauteils vom Ankergrund möglich. EP 1 972 799 A1 beschreibt eine bekannte Hülse. Aufgabe der Erfindung ist, eine vereinfachte Hülse für eine Abstandsmontage eines Bauteils an einem Ankergrund, eine Schraube mit der Hülse und ein Drehwerkzeug für die Abstandsmontage mit der Hülse vorzuschlagen.

Diese Aufgabe wird erfindungsgemäß durch die Merkmale der Ansprüche 1, 4 und 6 gelöst.

Die erfindungsgemäße Hülse mit den Merkmalen des Anspruchs 1 ist als radial federnder Clip ausgebildet, der in radialer Richtung, das heißt seitlich beziehungsweise von einer Seite auf einen Schraubenschaft einer Schraube aufklipsbar ist. Die erfindungsgemäße Hülse ist also zumindest auf einem Teil ihrer axialen Länge kein geschlossenes Rohr, sondern weist eine Unterbrechung in einer Umfangswand auf, die sich vorzugsweise ausgehend von einem Stirnende der Hülse über zumindest einen Teil der axialen Länge der Hülse erstreckt. Die Unterbrechung kann achsparallel oder schräg zu einer achsparallelen Richtung beispielsweise wendelförmig, wellenförmig oder zick-zack-förmig verlaufen. Radial in einer Richtung zur Hülse gesehen erstreckt sich die Unterbrechung über weniger als 180° und die Hülse folglich über mehr als 180° in einer Umfangsrichtung, so dass eine lichte Breite der Unterbrechung radial in der einen Richtung zur Hülse gesehen kleiner als ein Innendurchmesser der Hülse ist. Bei einer beispielsweise wendelförmigen, wellenförmigen oder zick-zack-förmigen Unterbrechung kann die Unterbrechung auch breiter als 180° in der Umfangsrichtung sein, sofern ihre lichte Breite radial in der einen Richtung gesehen schmaler als 180° in der Umfangsrichtung ist. Jedenfalls ist die Hülse und ihre Unterbrechung so ausgebildet, dass die Hülse als radial federnder Clip in radialer Richtung beziehungsweise seitlich oder von einer Seite auf einen Schraubenschaft aufklipsbar ist und nach dem Aufklipsen so weit zusammen federt, dass sie durch Formschluss radial auf einem Schraubenschaft hält, dessen Durchmesser so groß wie der Innendurchmesser der Hülse ist. Selbstverständlich hält die Hülse in radialer Richtung auch auf einem Schraubenschaft mit einem größeren Durchmesser, und auf einem Schraubenschaft mit einem Durchmesser, der zwar kleiner als der Innendurchmesser der Hülse, jedoch größer als die lichte Breite der Unterbrechung - radial in der einen Richtung der Hülse gesehen - ist.

Die erfindungsgemäße Hülse ist drehbar auf einer Schraube, auf die beziehungsweise auf deren Schraubenschaft die Hülse aufgeklipst ist.

Die erfindungsgemäße Hülse weist ein Außengewinde, insbesondere ein Holzschraubengewinde zu einem Einschrauben der Hülse in ein Durchgangsloch in einem Bauteil auf.

Des Weiteren weist die erfindungsgemäße Hülse ein unteres Widerlager und ein oberes Widerlager auf, wobei das obere Widerlager durch Anlage an einer Oberseite eines Schraubenkopfs die Hülse axial in einer Richtung und das untere Widerlager durch Anlage an einer Unterseite des Schraubenkopfs die Hülse axial in einer entgegengesetzten Richtung an der Schraube festlegt, auf deren Schraubenschaft die Hülse im Bereich des Schraubenkopfs aufgeklipst ist. Als "Oberseite" wird eine einem Schraubengewinde und dem Schraubenschaft der Schraube abgewandte, und als "Unterseite" eine dem Schraubengewinde und dem Schraubenschaft der Schraube zugewandte Seite des Schraubenkopfs bezeichnet. Als "oberes Widerlager" der erfindungsgemäßen Hülse wird das der Oberseite des Schraubenkopfs zugeordnete Widerlager und als "unteres Widerlager" der erfindungsgemäßen Hülse das der Unterseite des Schraubenkopfs zugeordnete Widerlager bezeichnet. Die beiden Widerlager halten die Hülse vorzugsweise axial spielfrei oder mit wenig Axialspiel von vorzugsweise weniger als einer Steigung des Gewindes, wobei ein größeres Axialspiel nicht grundsätzlich ausgeschlossen ist, wenngleich ein Axialspiel der Hülse auf der Schraube für die Abstandseinstellung unpraktisch erscheint und deswegen eine axial spielfreie oder auf der Schraube möglichst wenig Axialspiel aufweisende Hülse bevorzugt ist.

Die erfindungsgemäße Hülse weist einen Hülsenwerkzeugsitz, beispielsweise einen Innensechskant oder einen Innenstern, zu einem durch Formschluss drehfesten Ansetzen eines Drehwerkzeugs, beispielsweise eines Schraubendrehers, auf. Der Hülsenwerkzeugsitz befindet sich vorzugsweise koaxial auf oder über der Oberseite des Schraubenkopfs einer Schraube, wenn die Hülse in vorgesehener Weise auf den Schraubenschaft aufgeklipst ist.

Außerdem weist die erfindungsgemäße Hülse eine Öffnung an einem dem oberen Widerlager zugeordneten Stirnende der Hülse auf, durch die ein Schraubenwerkzeugsitz am beziehungsweise im Schraubenkopf der Schraube zugänglich ist, auf deren Schraubenschaft die Hülse in vorgesehener Weise aufgeklipst ist. Der Schraubenwerkzeugsitz ist beispielsweise ebenfalls ein Innensechskant oder ein Innenstern oder beispielsweise auch ein Kreuzschlitz zu einem durch Formschluss drehfesten Ansetzen eines Drehwerkzeugs am Schraubenkopf der Schraube. Dadurch lässt sich eine Schraube, auf deren Schraubenschaft die erfindungsgemäße Hülse in vorgesehener Weise aufgeklipst ist, durch ein Bauteil in einen Ankergrund und zugleich die Hülse in das Bauteil einschrauben. Durch anschließendes Ausdrehen der Schraube um ein begrenztes Stück aus dem Ankergrund, ohne die aufgeklipste und in das Bauteil eingeschraubte Hülse mitzudrehen, lässt sich das Bauteil in einen gewünschten Abstand vom Ankergrund bringen.

Vorzugsweise ist das obere Widerlager der erfindungsgemäßen Hülse ringförmig und befindet sich auf der Oberseite des Schraubenkopfs, wenn die Hülse in vorgesehener Weise auf den Schraubenschaft aufgeklipst ist. Das ringförmig ausgebildete obere Widerlager weist einen Innensechskant, einen Innenstern oder einen anders geformten Hülsenwerkzeugsitz zu dem durch Formschluss drehfesten Ansetzen des Drehwerkzeugs auf, der zugleich die Öffnung bildet, durch die der Schraubenwerkzeugsitz am oder im Schraubenkopf der Schraube zu dem durch Formschluss drehfesten Ansetzen des gleichen oder eines anderen Drehwerkzeugs zugänglich ist. Vorzugsweise ist der Hülsenwerkzeugsitz koaxial zu der Schraube, wenn die Hülse in vorgesehener Weise auf den Schraubenschaft aufgeklipst ist.

Eine Ausgestaltung der Erfindung sieht Frässchneiden an einem Außenumfang und/oder an einer Unterseite des unteren Widerlagers und/oder an einem Außenumfang des oberen Widerlagers der Hülse vor, die bei einem Einschrauben der Hülse in ein Durchgangsloch in dem Bauteil Material spanend von einem Innenumfang des Durchgangslochs abtragen und das Einschrauben der Hülse in das Bauteil erleichtern.

Eine Ausgestaltung der Erfindung sieht vor, dass die Schraube einen gewindelosen Schaftabschnitt zwischen dem Schraubengewinde und dem Schraubenkopf aufweist, dessen Durchmesser kleiner als ein Außendurchmesser des Schraubengewindes ist. Die Hülse ist radial bzw. von einer Seite insbesondere auf den gewindelosen Schaftabschnitt zwischen dem Schraubenschaft und dem Schraubenkopf aufgeklipst, so dass sich ihr oberes Widerlager auf der Oberseite des Schraubenkopfs und ihr unteres Widerlager auf der Unterseite des Schraubenkopfs befinden. Durch das Aufklipsen ist die Hülse drehbar auf dem Schraubenschaft gehalten und die beiden Widerlager legen die Hülse axial in beiden Richtungen am Schraubenkopf fest. Möglich ist, dass die Schraube zwischen dem Schraubengewinde und dem Schraubenkopf auch einen oder mehrere Schaftabschnitte größeren Durchmessers aufweist. Insbesondere ist ein Schaftabschnitt mit Frässchneiden am Umfang zwischen dem gewindelosen Schaftabschnitt und dem Schraubengewinde möglich. Der Schaftabschnitt mit den Frässchneiden kann den größeren Durchmesser aufweisen, insbesondere können sich die Frässchneiden auf dem größeren Durchmesser befinden. Vorzugsweise ist ein Kerndurchmesser des Schraubengewindes kleiner als der Durchmesser des gewindelosen Schaftabschnitts zwischen dem Schraubengewinde und dem Schraubenkopf der Schraube.

Ein Durchmesser des Schraubenschafts der Schraube, auf die die Hülse aufgeklipst ist, ist größer, als die Unterbrechung der Hülse radial in der einen Richtung zur Hülse gesehen breit ist, so dass die aufgeklipste Hülse den Schraubenschaft um mehr als 180° umschließt und durch Formschluss radial auf dem Schraubenschaft gehalten ist. Das gilt jedenfalls für einen Teil des Schraubenschafts, auf dem sich die aufgeklipste Hülse befindet.

Das erfindungsgemäße Drehwerkzeug mit den Merkmalen des Anspruchs 6 weist eine Werkzeugkontur zu einem durch Formschluss drehfesten Ansetzen am Hülsenwerkzeugsitz der Hülse auf. Die Werkzeugkontur ist beispielsweise ein Sechskant oder Stern. Die Werkzeugkontur ist ein Gegenstück zum Hülsenwerkzeugsitz und weist eine zum Hülsenwerkzeugsitz komplementäre Form oder jedenfalls eine Form auf, die ein durch Formschluss drehfestes Ansetzen des Drehwerkzeugs am Hülsenwerkzeugsitz ermöglicht.

Des Weiteren weist das erfindungsgemäße Drehwerkzeug ein zu seiner Werkzeugkontur vorzugsweise koaxiales Durchgangsloch mit einem Innensechskant auf, in den ein handelsübliches Schrauberbit mit einem Sechskantschaft und einem Antriebselement, beispielsweise ein Sechskant oder Stern, einbringbar ist, so dass das Drehwerkzeug durch Formschluss drehfest mit dem Schrauberbit ist. Schrauberbits weisen einen Sechskantschaft auf, mit dem sie zu einem Drehantrieb in eine genormte Bitaufnahme mit einem komplementären Innensechskant einsetzbar sind, wobei der Sechskantschaft des Schrauberbits axial aus der Bitaufnahme vorsteht. Der aus der Bitaufnahme vorstehende Sechskantschaft des Schrauberbits ist in das Durchgangsloch des erfindungsgemäßen Drehwerkzeugs einbringbar, so dass das Drehwerkzeug durch Formschluss drehfest auf dem Schrauberbit ist.

Das erfindungsgemäße Drehwerkzeug ist so kurz, dass das Schrauberbit auf einer der Bitaufnahme, in die das Schrauberbit eingesetzt ist, gegenüberliegenden Seite aus dem Drehwerkzeug vorsteht. Dadurch lässt sich das Schrauberbit, das in die Bitaufnahme eingesetzt ist, durch das erfindungsgemäße Drehwerkzeug hindurch mit seinem Antriebselement an dem Schraubenwerkzeugsitz am bzw. im Schraubenkopf der Schraube, auf deren Schraubenschaft die erfindungsgemäße Hülse aufgeklipst ist, durch Formschluss drehfest ansetzen. Zugleich greift die Werkzeugkontur des Drehwerkzeugs durch Formschluss drehfest am Hülsenwerkzeugsitz an, so dass mit dem Schrauberbit mit dem aufgesetzten Drehwerkzeug die Schraube und die Hülse gemeinsam drehend angetrieben werden können. Nach dem Einschrauben der Schraube in den Ankergrund wird das Drehwerkzeug außer Eingriff vom Hülsenwerkzeugsitz gebracht oder vom Schrauberbit abgenommen, so dass die Schraube ohne die Hülse drehend angetrieben und dadurch der Abstand des Bauteils vom Ankergrund eingestellt werden kann.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination. Es sind Ausführungen der Erfindung möglich, die nicht alle Merkmale eines abhängigen Anspruchs aufweisen.

Die Erfindung wird nachfolgend anhand eines in der Zeichnung dargestellten Ausführungsbeispiels näher erläutert. Es zeigen:

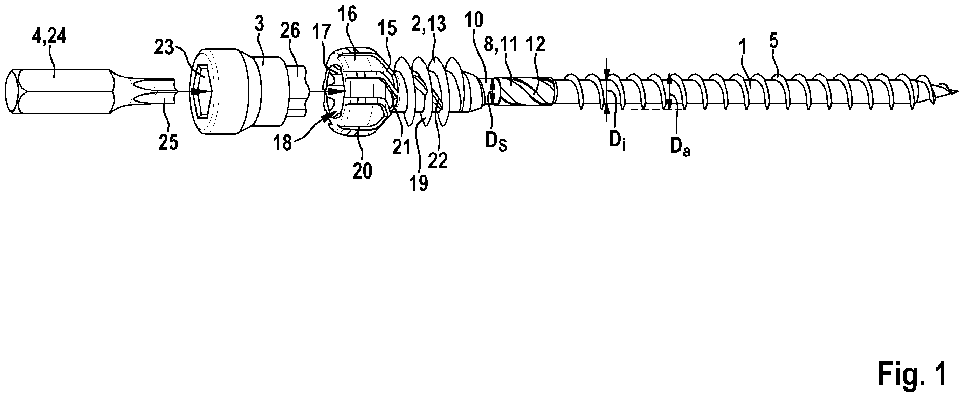

- Figur 1: eine Schraube mit einer erfindungsgemäßen Hülse und einem erfindungsgemäßen Drehwerkzeug und ein handelsübliches Schrauberbit in einer perspektivischen Darstellung von einer Seite;

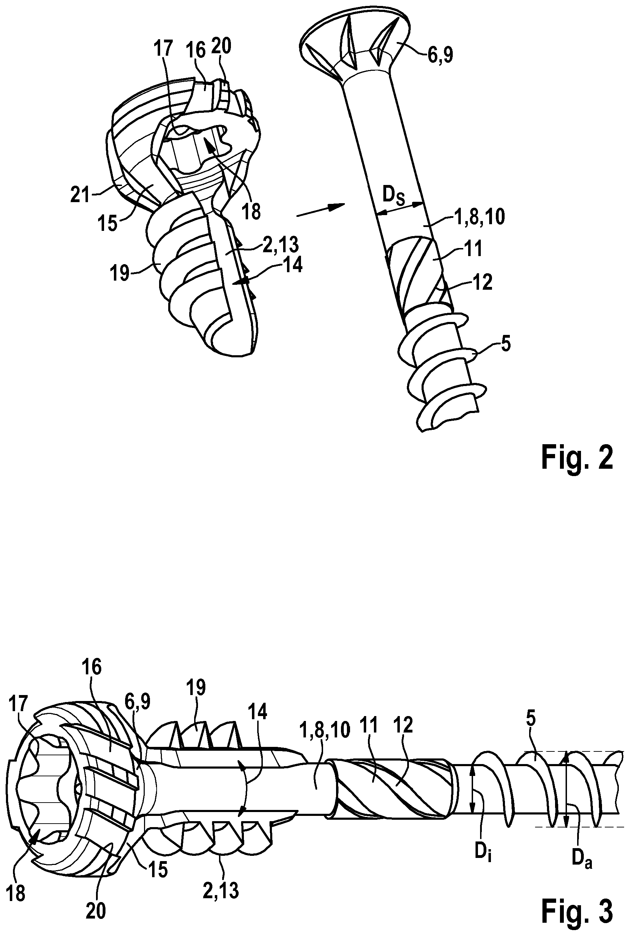

- Figur 2: die erfindungsgemäße Hülse neben der Schraube;
- Figur 3: die auf die Schraube aufgeklipste Hülse aus Figuren 1 und 2; und
- Figuren 4 und 5: die Schraube mit der aufgeklipsten, erfindungsgemäßen Hülse und dem erfindungsgemäßen, auf das Schrauberbit aufgesetzten erfindungsgemäßen Drehwerkzeug in unterschiedlichen Perspektiven.

Die Zeichnungen zeigen eine Schraube 1, eine erfindungsgemäße Hülse 2 zu einer Weiterbildung der Schraube 1 in eine Distanzschraube, die in radialer Richtung auf die Schraube 1 aufklipsbar ist, ein erfindungsgemäßes Drehwerkzeug 3 zu einem Drehantrieb der Hülse 2 und ein handelsübliches Schrauberbit 4 zu einem Drehantrieb des Drehwerkzeugs 3 und der Schraube 1.

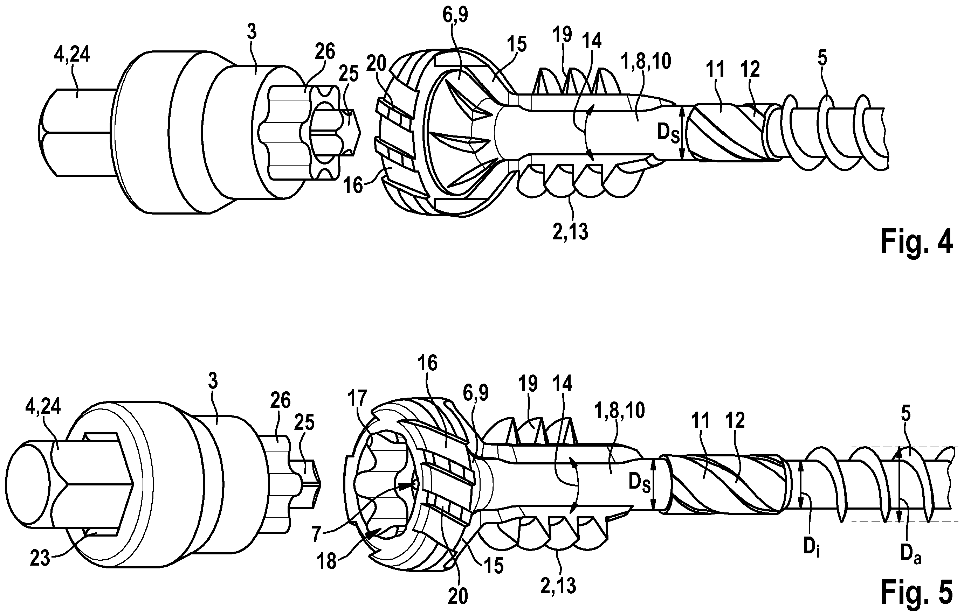

Die Schraube 1 ist eine Holzschraube mit einem Holzschraubengewinde, das nachfolgend allgemein als Schraubengewinde 5 bezeichnet wird, und einem Senkkopf als Schraubenkopf 6. In einer Oberseite des Schraubenkopfs 6 ist ein Innenstern als Schraubenwerkzeugsitz 7 vorhanden (siehe Figur 5). Als "Oberseite" des Schraubenkopfs 6 wird eine einem Schraubenschaft 8 und dem Schraubengewinde 5 abgewandte Stirnseite des Schraubenkopfs 6 bezeichnet, wobei das Schraubengewinde 5 auf einem axialen Abschnitt des Schraubenschafts 8 vorhanden ist. Als "Unterseite" 9 des Schraubenkopfs 6 wird eine dem Schraubenschaft 8 und dem Schraubengewinde 5 zugewandte Seite des Schraubenkopfs 6 bezeichnet, die bei einem Senkkopf kegelstumpfförmig ist.

Zwischen dem Schraubenkopf 6 und dem Schraubengewinde 5 weist die Schraube 1 einen gewindelosen Schaftabschnitt 10 und zwischen dem gewindelosen Schaftabschnitt 9, der sich unmittelbar an die Unterseite des Schraubenkopfs 6 anschließt, und dem Schraubengewinde 5 einen Schaftabschnitt 11 mit wendelförmigen Frässchneiden 12 auf. Ein Schaftdurchmesser Ds des gewindelosen Schaftabschnitts 10 ist kleiner als ein Außendurchmesser Dₐ des Schraubengewindes 5 und größer als ein Kerndurchmesser Dᵢ des Schraubengewindes 5.

Die erfindungsgemäße Hülse 2 ist auf einem axialen Teil ihrer Länge als radial federnder Clip 13 mit einem C-förmigen Kreisquerschnitt ausgebildet, der sich in Umfangsrichtung über etwas mehr als 180° erstreckt und auf einem übrigen Teil seines Umfangs eine Unterbrechung 14 aufweist. Die Unterbrechung 14 kann auch als breiter Längsschlitz aufgefasst werden, der sich in der Umfangsrichtung über etwas weniger als 180° erstreckt. Im Ausführungsbeispiel verläuft die Unterbrechung 14 achsparallel, denkbar ist allerdings auch eine beispielsweise wendelförmige, wellenförmige oder zick-zackförmige Unterbrechung (nicht dargestellt), die sogar breiter als die 180° in der Umfangsrichtung sein kann, deren lichte Breite auf ihrer gesamten axialen Länge radial zur Hülse 2 in einer Richtung gesehen allerdings schmaler als die 180° in der Umfangsrichtung und schmaler als der Durchmesser Ds des gewindelosen Schaftabschnitts 10 der Schraube 1 ist.

Die Unterbrechung 14 beginnt vorzugsweise an einem Stirnende der Hülse 2 und erstreckt sich über einen Teil der axialen Länge der Hülse 2, so dass die Unterbrechung 14 an einem Ende offen ist, oder geht über die gesamte axiale Länge der Hülse 2 durch, so dass die Unterbrechung 14 an beiden Enden offen ist.

Durch die Unterbrechung 14 ist die Hülse 2 radial federnd und in radialer Richtung bzw. von einer Seite auf den Schraubenschaft 8 der Schraube 1 aufklipsbar. Im Ausführungsbeispiel wird die Hülse 2 auf den gewindelosen Schaftabschnitt 10 aufgeklipst, dessen Durchmesser Ds so groß wie ein Innendurchmesser der Hülse 2 im Bereich der Unterbrechung 14 ist. Beim Durchtritt des Schraubenschafts 8 durch die Unterbrechung 14 der Hülse 2 weitet sich die Hülse 2 elastisch so weit auf, dass die Unterbrechung 14 so breit wie der Durchmesser des Schraubenschafts 8 bzw. des gewindelosen Schaftabschnitts 10 ist, so das der Schraubenschaft 8 durch die Unterbrechung 14 der Hülse 2 durchtreten kann. Nach dem Durchtritt des Schraubenschafts 8 federt die Hülse 2 wieder zusammen, so dass sie radial auf dem Schraubenschaft 8 hält. Weil sie radial federnd und auf den Schraubenschaft 8 aufklipsbar ist, kann die erfindungsgemäße Hülse 2 auch als Clip 13 aufgefasst werden.

An den axialen Abschnitt der Hülse 2 mit dem C-förmigen Kreisquerschnitt mit gleichbleibendem Durchmesser schließt sich an einem Ende eine kegelstumpfförmige oder trichterförmige Aufweitung an, die ein unteres Widerlager 15 der Hülse 2 bildet. Auch in diesem Abschnitt weist die Hülse 2 einen C-förmigen Kreisquerschnitt auf, allerdings mit sich änderndem Durchmesser. Die Unterbrechung 14 setzt sich durch das untere Widerlager 15 hindurch fort, wobei sich die Unterbrechung 14 im Bereich des unteren Widerlagers 15 auf 180° oder sogar mehr in der Umfangsrichtung erweitern kann.

An einem durchmessergrößeren Ende des unteren Widerlagers 15 weist die Hülse 2 einen in Umfangsrichtung geschlossenen Ring auf, der ein oberes Widerlager 16 der Hülse 2 bildet. Die Hülse 2 wird radial von einer Seite so auf den gewindelosen Schaftabschnitt 10 des Schraubenschafts 8 aufgeklipst, dass sich das untere Widerlager 15 der Hülse 2 an der Unterseite 9 des Schraubenkopfs 6 und das obere Widerlager 16 auf der Oberseite des Schraubenkopfs 6 der Schraube 1 befinden. Durch Anlage der Widerlager 15, 16 an der Unterseite 9 und der Oberseite des Schraubenkopfs 6 ist die Hülse 2 axial an der Schraube 1 festgelegt, wobei die aufgeklipste Hülse 2 drehbar auf der Schraube 1 ist.

Der das obere Widerlager 16 bildende Ring der Hülse 2 weist einen Innenstern als Hülsenwerkzeugsitz 17 zu einem durch Formschluss drehfesten Ansetzen des erfindungsgemäßen Drehwerkzeugs 3 auf, wobei der Hülsenwerkzeugsitz 17 auch eine andere Form, beispielsweise einen Innensechskant, aufweisen kann. Der das obere Widerlager 16 bildende Ring ragt radial so weit nach innen, dass er auf der Oberseite des Schraubenkopfs 6 der Schraube 1 aufliegt, um den axialen Halt der Hülse 2 auf der Schraube 1 zu gewährleisten. Der das obere Widerlager 16 bildende Ring, der Hülsenwerkzeugsitz 17 und das untere Widerlager 15 sind koaxial zur restlichen Hülse 2. Ein zur restlichen Hülse 2 koaxiales Mittelloch des das obere Widerlager 16 bildenden Rings der Hülse 2, das die Sternform aufweist und den Hülsenwerkzeugsitz 17 bildet, bildet zugleich auch eine Öffnung 18, durch die der Schraubenwerkzeugsitz 7 im Schraubenkopf 6 der Schraube 1 zu einem durch Formschluss drehfesten Ansetzen eines Drehwerkzeugs zugänglich ist. Im Ausführungsbeispiel wird das Schrauberbit 4 als Drehwerkzeug für die Schraube 1 verwendet.

In dem axialen Abschnitt der Hülse 2 mit dem C-förmigen Kreisquerschnitt mit gleichbleibendem Durchmesser weist die Hülse 2 ein Außengewinde 19 zum Einschrauben in ein Durchgangsloch in einem nicht dargestellten Bauteil, beispielsweise einer plattenförmigen Wand- oder Deckenverkleidung, auf. Im Ausführungsbeispiel ist das Außengewinde 19 ein Holzschraubengewinde. Im Bereich der Unterbrechung 14 ist das Außengewinde 19 ebenfalls unterbrochen.

An einem Außenumfang des oberen Widerlagers 16, an einer Unter- bzw. Außenseite des trichterförmigen bzw. kegelstumpfförmigen unteren Widerlagers 15, und in dem axialen Abschnitt mit dem C-förmigen Kreisquerschnitt zwischen Gewindegängen des Außengewindes 19, weist die Hülse 2 Frässchneiden 20, 21, 22 auf, die beim Einschrauben in das Durchgangsloch des nicht gezeichneten Bauteils Späne von einer Lochwand trennen und das Einschrauben der Hülse 2 in das Bauteil erleichtern.

Das erfindungsgemäße Drehwerkzeug 3 ist ein durchmessergestuftes, zylindrisches Hohlteil mit einem koaxialen Durchgangsloch, das einen Innensechskant 23 aufweist. Das Schrauberbit 4 weist einen Sechskantschaft 24 zu einem durch Formschluss drehfesten Einsetzen in eine nicht dargestellte Bitaufnahme, die einen Innensechskant aufweist, zu einem Drehantrieb des Schrauberbits 4 auf. Der Sechskantschaft 24 des Schrauberbits 4 steht aus der Bitaufnahme vor, so dass das Drehwerkzeug 3 mit seinem Durchgangsloch mit dem Innensechskant 23 drehfest auf den Sechskantschaft 24 des Schrauberbits 4 aufgesetzt und mit dem Schrauberbit 4 drehend angetrieben werden kann.

Das erfindungsgemäße Drehwerkzeug 3 ist axial so kurz, dass das Schrauberbit 4 auf einer der Bitaufnahme gegenüberliegenden Seite axial aus dem Drehwerkzeug 3 vorsteht, wenn das Schrauberbit 4 in die Bitaufnahme eingesetzt und bis zu einem Anschlag der Bitaufnahme am Drehwerkzeug 3 in das Durchgangsloch des Drehwerkzeugs 3 gesteckt ist (siehe Figuren 4 und 5).

Das Durchgangsloch des Drehwerkzeugs 3 weist eine in der Zeichnung nicht sichtbare Durchmesserstufe auf, die eine Einstecktiefe des Schrauberbits 4 begrenzt.

Das der Bitaufnahme ferne Ende des Schrauberbits 4, das axial aus dem Drehwerkzeug 3 vorsteht, weist ein sternförmiges Profil oder allgemein ein zu dem Schraubenwerkzeugsitz 7 im Schraubenkopf 6 der Schraube 1 komplementäres Antriebselement 25 auf, so dass die Schraube 1 mit dem Schrauberbit 4, auf das das Drehwerkzeug 3 aufgesetzt ist, drehend antreibbar ist.

Ein dem Schraubenkopf 6 zugewandtes Ende des Drehwerkzeugs 3, aus dem das Schrauberbit 4 vorsteht, weist ein Sternprofil oder allgemein eine zu dem Hülsenwerkzeugsitz 17 komplementäre Werkzeugkontur 26 zu einem durch Formschluss drehfesten Ansetzen am beziehungsweise im Hülsenwerkzeugsitz 17 der Hülse 2 auf, so dass die Hülse 2 mit dem Schrauberbit 4 über das drehfest auf das Schrauberbit 4 aufgesetzte Drehwerkzeug 3 drehend antreibbar ist.

Für eine Abstandsbefestigung des nicht gezeichneten Bauteils wird die Schraube 1 durch das Durchgangsloch in dem Bauteil in einen ebenfalls nicht gezeichneten Ankergrund, beispielsweise in einen Dübel in einem Bohrloch in einer Wand oder einer Decke geschraubt. Zum Einschrauben wird die Schraube 1 mit dem Schrauberbit 4, auf das das Drehwerkzeug 3 aufgesetzt ist, drehend angetrieben. Dabei befindet sich die Werkzeugkontur 26 des Drehwerkzeugs 3 in Eingriff mit dem Hülsenwerkzeugsitz 17, so dass die Hülse 2 zusammen mit der Schraube 1 drehend angetrieben und in das Bauteil eingeschraubt wird. Anschließend wird das Schrauberbit 4 aus dem Drehwerkzeug 3 und das Drehwerkzeug 3 aus dem Hülsenwerkzeugsitz 17 herausgezogen und das Schrauberbit 4 ohne das Drehwerkzeug 3 wieder am Schraubenwerkzeugsitz 7 angesetzt. Die Schraube 1 wird jetzt ein Stück weit aus dem Ankergrund herausgedreht, wobei sich die Hülse 2 nicht mitdreht, so das ein Abstand zwischen dem Bauteil, in das die Hülse 2 geschraubt ist, und dem Ankergrund einstellbar ist.

### Bezugszeichenliste

- Ds: Schaftdurchmesser
- Dₐ: Außendurchmesser
- Dᵢ: Kerndurchmesser
- 1: Schraube
- 2: Hülse
- 3: Drehwerkzeug
- 4: Schrauberbit
- 5: Schraubengewinde
- 6: Schraubenkopf
- 7: Schraubenwerkzeugsitz
- 8: Schraubenschaft
- 9: Unterseite des Schraubenkopfs 6
- 10: gewindeloser Schaftabschnitt
- 11: Schaftabschnitt mit Frässchneiden 12
- 12: Frässchneiden
- 13: Clip
- 14: Unterbrechung
- 15: unteres Widerlager
- 16: oberes Widerlager
- 17: Hülsenwerkzeugsitz
- 18: Öffnung
- 19: Außengewinde
- 20, 21, 22: Frässchneide
- 23: Innensechskant
- 24: Sechskantschaft
- 25: Antriebselement des Schrauberbits 4
- 26: Werkzeugkontur des Drehwerkzeugs 3
- Ds: Schaftdurchmesser
- Da: Außendurchmesser
- Di: Kerndurchmesser

## Patentansprüche

1. Hülse zur Weiterbildung einer einen Schraubenkopf (6) aufweisenden Schraube (1) in eine Distanzschraube, wobei die Hülse (2) eine Unterbrechung (14) in einer Umfangswand, ein Außengewinde (19), ein unteres Widerlager (15) zu einer Anlage an einer Unterseite (9) des Schraubenkopfes (6) und ein oberes Widerlager (16) zu einer Anlage an einer Oberseite des Schraubenkopfes (6), einen Hülsenwerkzeugsitz (17) zu einem durch Formschluss drehfesten Ansetzen eines Drehwerkzeugs (3) und eine Öffnung (18) an einem dem oberen Widerlager (16) zugeordnenten Stirnende der Hülse (2) zu einem axialen Ansetzen eines Drehwerkzeugs (3) an einem Schraubenwerkzeugsitz (7) an dem Schraubenkopf (6) der Schraube (1) durch die Öffnung (18) am Stirnende der Hülse (2) hindurch aufweist, wobei die Hülse (2) durch die Unterbrechung (14) als radial federnder Clip (13) ausgebildet ist, der sich über mehr als 180° in einer Umfangsrichtung erstreckt, so dass die Hülse (2) in radialer Richtung auf einen Schraubenschaft (8) aufklipsbar ist, dessen Durchmesser (D_{S}) so groß wie ein Innendurchmesser der Hülse (2) ist.

2. Hülse nach Anspruch 1, **dadurch gekennzeichnet, dass** das obere Widerlager (16) ringförmig ist und dass das obere Widerlager (16) den Hülsenwerkzeugsitz (17) zu dem durch Formschluss drehfesten Ansetzen des Drehwerkzeugs (3) an der Hülse (2) und die Öffnung (18) zu dem axialen Ansetzen des Drehwerkzeugs an dem Schraubenwerkzeugsitz (7) am Schraubenkopf (6) der Schraube (1) aufweist.

3. Hülse nach Anspruch 1 oder 2, **dadurch gekennzeichnet, dass** die Hülse (2) Frässchneiden (20, 21, 22) an ihrem Außenumfang und/oder an einer Unterseite des unteren Widerlagers (15) und/oder an einem Außenumfang des oberen Widerlagers (16) aufweist.

4. Schraube mit einer Hülse nach einem oder mehreren der Ansprüche 1 bis 3, **dadurch gekennzeichnet, dass** die Schraube (1) einen gewindelosen Schaftabschnitt (10) zwischen einem Schraubengewinde (5) und dem Schraubenkopf (6) aufweist, dessen Durchmesser (D_{S}) kleiner als ein Außendurchmesser (Dₐ) des Schraubengewindes (5) und vorzugsweise größer als ein Kerndurchmesser (Dᵢ) des Schraubengewindes (5) ist und dass die Hülse (2) so auf den gewindelosen Schaftabschnitt (10) der Schraube (1) aufgeklipst ist, dass das obere Widerlager (16) auf einer Oberseite und das untere Widerlager (15) auf einer Unterseite (9) des Schraubenkopfs (6) angeordnet ist.

5. Schraube mit einer Hülse nach einem oder mehreren der vorhergehenden Ansprüche, **dadurch gekennzeichnet, dass** die Unterbrechung (14) der Hülse (2) zum Aufklipsen der Hülse (2) auf den Schraubenschaft (8) schmaler als der Durchmesser (D_{S}) des gewindelosen Schaftabschnitts (10) ist.

6. System mit einer Hülse (2) nach einem oder mehreren der Ansprüche 1 bis 3, einer Schraube (1), auf deren Schraubenschaft (8) die Hülse (2) aufgeklipst ist, und mit einem Drehwerkzeug zu einem Drehantrieb, **dadurch gekennzeichnet, dass** das Drehwerkzeug (3) eine Werkzeugkontur (26) zu einem durch Formschluss drehfesten Ansetzen am Hülsenwerkzeugsitz (17) und ein Durchgangsloch mit einem Innensechskant (23) zu einer durch Formschluss drehfesten Aufnahme eines Schrauberbits (4) aufweist, das so weit in das Durchgangsloch des Drehwerkzeugs (3) eingebracht werden kann, dass das Schrauberbit (4) so weit aus dem Drehwerkzeug (3) vorstehen kann, dass ein Antriebselement des Schrauberbits (4) zu einem durch Formschluss drehfesten Ansetzen am Schraubenwerkzeugsitz (7) des Schraubenkopfs (6) formschlüssig in den Schraubenwerkzeugsitz (7) greift, wenn das Antriebselement (25) des Drehwerkzeugs (3) drehfest an dem Hülsenwerkzeugsitz (17) angesetzt ist.

7. System nach Anspruch 6 mit einem Schrauberbit (4), **dadurch gekennzeichnet, dass** das Schrauberbit (4) einen Sechskantschaft (24) aufweist und das Drehwerkzeug (3) so kurz ist, dass das Schrauberbit (4) so in das Durchgangsloch des Drehwerkzeugs (3) einbringbar ist, dass das Schrauberbit (4) mit seinem Sechskantschaft (24) durch Formschluss mit dem Innensechskant (23) im Durchgangsloch des Drehwerkzeugs (3) drehfest mit dem Drehwerkzeug (3) ist, dass ein Antriebselement (25) des Schrauberbits (4) zu dem durch Formschluss drehfesten Ansetzen am Schraubenwerkzeugsitz (7) des Schraubenkopfs (6) an einem Ende aus dem Durchgangsloch des Drehwerkzeugs (3) vorsteht und dass das Schrauberbit (4) zu einem Einsetzen in einen Bithalter aus dem anderen Ende des Durchgangslochs des Drehwerkzeugs (3) vorsteht.

## Claims

1. Sleeve for developing a screw (1) having a screw head (6) into a spacer screw, wherein the sleeve (2) has a gap (14) in a circumferential wall, an external thread (19), a lower counter-bearing (15) for bearing against an underside (9) of the screw head (6) and an upper counter-bearing (16) for bearing against an upper side of the screw head (6), a sleeve tool seat (17) for attachment of a rotary tool (3) so as to be interlockingly fixed for conjoint rotation, and an opening (18) on an end face of the sleeve (2) associated with the upper counter-bearing (16) for axial attachment of a rotary tool (3) to a screw tool seat (7) on the screw head (6) of the screw (1) through the opening (18) at the end face of the sleeve (2), wherein the sleeve (2) is, as a result of the gap (14), in the form of a radially resilient clip (13) which extends over more than 180° in a circumferential direction, so that the sleeve (2) can be clipped in a radial direction onto a screw shank (8) the diameter (Dₛ) of which is the same as an internal diameter of the sleeve (2).

2. Sleeve according to claim 1, **characterised in that** the upper counter-bearing (16) is ring-shaped; and the upper counter-bearing (16) has the sleeve tool seat (17) for the attachment of the rotary tool (3) to the sleeve (2) so as to be interlockingly fixed for conjoint rotation, and the opening (18) for the axial attachment of the rotary tool to the screw tool seat (7) on the screw head (6) of the screw (1).

3. Sleeve according to claim 1 or 2, **characterised in that** the sleeve (2) has milling cutters (20, 21, 22) on its outer circumference and/or on an underside of the lower counter-bearing (15) and/or on an outer circumference of the upper counter-bearing (16).

4. Screw having a sleeve according to one or more of claims 1 to 3, **characterised in that** the screw (1) has a threadless shank portion (10) between a screw thread (5) and the screw head (6), the diameter (Dₛ) of which shank portion is smaller than an external diameter (Dₐ) of the screw thread (5) and preferably larger than a core diameter (Dᵢ) of the screw thread (5); and the sleeve (2) has been clipped onto the threadless shank portion (10) of the screw (1) so that the upper counter-bearing (16) is arranged on an upper side and the lower counter-bearing (15) on an underside (9) of the screw head (6).

5. Screw having a sleeve according to one or more of the preceding claims, **characterised in that** the gap (14) in the sleeve (2) for clipping the sleeve (2) onto the screw shank (8) is narrower than the diameter (Dₛ) of the threadless shank portion (10).

6. System having a sleeve (2) according to one or more of claims 1 to 3, a screw (1), onto the screw shank (8) of which the sleeve (2) has been clipped, and having a rotary tool for driving in rotation, **characterised in that** the rotary tool (3) has a tool contour (26) for attachment to the sleeve tool seat (17) so as to be interlockingly fixed for conjoint rotation, and a through-hole having a hexagonal socket (23) for receiving a screwdriver bit (4) so as to be interlockingly fixed for conjoint rotation, which screwdriver bit can be introduced into the through-hole of the rotary tool (3) until the screwdriver bit (4) is able to project from the rotary tool (3) to an extent such that, for attachment to the screw tool seat (7) of the screw head (6) so as to be interlockingly fixed for conjoint rotation, a drive element of the screwdriver bit (4) engages interlockingly in the screw tool seat (7) once the drive element (25) of the rotary tool (3) has been attached to the sleeve tool seat (17) for conjoint rotation.

7. System according to claim 6 having a screwdriver bit (4), **characterised in that** the screwdriver bit (4) has a hexagonal shank (24) and the rotary tool (3) is sufficiently short that the screwdriver bit (4) is introducible into the through-hole of the rotary tool (3) so that the screwdriver bit (4), by interlocking engagement of its hexagonal shank (24) with the hexagonal socket (23) in the through-hole of the rotary tool (3), is fixed for conjoint rotation with the rotary tool (3); a drive element (25) of the screwdriver bit (4), for attachment to the screw tool seat (7) of the screw head (6) so as to be interlockingly fixed for conjoint rotation, projects from one end of the through-hole of the rotary tool (3); and the screwdriver bit (4), for insertion into a bit holder, projects from the other end of the through-hole of the rotary tool (3).

## Revendications

1. Manchon pour la transformation d'une vis (1) présentant une tête de vis (6) en une vis d'écartement, le manchon (2) présentant une découpe (14) dans une paroi périphérique, un filetage extérieur (19), une butée inférieure (15) pour une application sur une face inférieure (9) de la tête de vis (6) et une butée supérieure (16) pour une application sur une face supérieure de la tête de vis (6), un siège d'outil de manchon (17) pour une fixation solidaire en rotation par complémentarité de formes d'un outil rotatif (3) et une ouverture (18) au niveau d'une extrémité frontale du manchon (2) associée à la butée supérieure (16) pour une fixation axiale d'un outil rotatif (3) sur un siège d'outil de vis (7) au niveau de la tête de vis (6) de la vis (1) à travers l'ouverture (18) au niveau de l'extrémité frontale du manchon (2), le manchon (2) étant formé via la découpe (14) en tant que pince élastique radiale, qui s'étend dans une direction périphérique sur plus de 180°, de sorte que le manchon (2) peut être enclipsé dans une direction circonférentielle sur une tige de vis (8), dont le diamètre (Dₛ) est aussi grand qu'un diamètre intérieur du manchon (2).

2. Manchon selon la revendication 1, **caractérisé en ce que** la butée supérieure (16) est de forme annulaire et **en ce que** la butée supérieure (16) présente le siège d'outil de manchon (17) pour la fixation solidaire en rotation par complémentarité de formes de l'outil rotatif(3) sur le manchon (2) et l'ouverture (18) pour la fixation axiale de l'outil rotatif sur le siège d'outil de vis (7) sur la tête de vis (6) de la vis (1).

3. Manchon selon la revendication 1 ou 2, **caractérisé en ce que** le manchon (2) présente des arêtes de fraisage (20, 21, 22) sur sa périphérie extérieure et/ou sur une face inférieure de la butée inférieure (15) et/ou sur une périphérie extérieure de la butée supérieure (16).

4. Vis avec un manchon selon une ou plusieurs des revendications 1 à 3, **caractérisée en ce que** la vis (1) présente une section de tige sans filetage (10) entre un filetage de vis (5) et la tête de vis (6), dont le diamètre (Dₛ) est inférieur à un diamètre extérieur (Dₐ) du filetage de vis (5) et de préférence supérieur à un diamètre de noyau (Dᵢ) du filetage de vis (5) et **en ce que** le manchon (2) est enclipsé sur la section de tige sans filetage (10) de la vis (1) de telle sorte que la butée supérieure (16) est disposée sur une face supérieure et la butée inférieure (15) sur une face inférieure (9) de la tête de vis (6).

5. Vis avec un manchon selon une ou plusieurs des revendications précédentes, **caractérisée en ce que** la découpe (14) du manchon (2) pour l'enclipsage du manchon (2) sur la tige de vis (8) est plus étroite que le diamètre (Dₛ) de la section de tige sans filetage (10).

6. Système comprenant un manchon (2) selon une ou plusieurs des revendications 1 à 3, une vis (1) sur la tige de vis (8) de laquelle le manchon (2) est enclipsé, et un outil rotatif pour un entraînement rotatif, **caractérisé en ce que** l'outil rotatif (3) présente un contour d'outil (26) pour une fixation solidaire en rotation par complémentarité de formes sur le siège d'outil de manchon (17) et un trou traversant avec un six pans creux (23) pour un logement solidaire en rotation par complémentarité de formes d'un embout de vis (4) qui peut être inséré dans le trou traversant de l'outil rotatif (3) jusqu'à ce que l'embout de vis (4) puisse faire saillie à partir de l'outil rotatif (3) jusqu'à ce qu'un élément d'entraînement de l'embout de vis (4) pour une fixation solidaire en rotation par complémentarité de formes sur le siège d'outil de vis (7) de la tête de vis (6) vienne en prise par complémentarité de formes dans le siège d'outil de vis (7) lorsque l'élément d'entraînement (25) de l'outil rotatif (3) est fixé solidaire en rotation au siège d'outil de manchon (17).

7. Système selon la revendication 6, comprenant un embout de visseuse (4), **caractérisé en ce que** l'embout de visseuse (4) présente une tige hexagonale (24) et l'outil rotatif (3) est si court que l'embout de visseuse (4) peut être introduit dans le trou traversant de l'outil rotatif (3), **en ce que** l'embout de visseuse (4) avec sa tige hexagonale (24) est solidaire en rotation avec l'outil rotatif (3) par complémentarité de formes avec le six pans creux (23) dans le trou traversant de l'outil rotatif (3), **en ce qu'**un élément d'entraînement (25) de l'embout de visseuse (4) fait saillie à une extrémité du trou traversant de l'outil rotatif (3) par rapport à la fixation solidaire en rotation par complémentarité de formes sur le siège d'outil de visse (7) de la tête de visse (6), et **en ce que** l'embout de visseuse (4) fait saillie à l'autre extrémité du trou traversant de l'outil rotatif (3) pour une insertion dans un porte-embout.
